# EUROPEAN PATENT SPECIFICATION

(11) **EP 4 129 819 B1**
(45) Date of publication and mention of the grant of the patent: **03.01.2024**
(21) Application number: 21400018.4
(22) Date of filing: 02.08.2021
(51) Int. Cl.: B64C 1/14

(54) **AN OPENING SYSTEM FOR A SWIVELING AIRCRAFT DOOR**
ÖFFNUNGSSYSTEM FÜR EINE SCHWENKBARE FLUGZEUGTÜR
SYSTÈME D'OUVERTURE D'UNE PORTE PIVOTANTE D'AÉRONEF

(43) Date of publication of application: 08.02.2023
(73) Proprietor: AIRBUS HELICOPTERS DEUTSCHLAND GmbH, 86609 Donauwörth (DE)
(72) Inventor: Huebner, Christoph, 91719 HEIDENHEIM (DE); Merkel, Christoph, 89567 SONTHEIM AN DER BRENZ (DE); Becker, Stefan, 86609 DONAUWÖRTH (DE); Tendyra, Thomas, 89443 SCHWENNINGEN (DE)
(74) Representative: GPI Brevets

(56) References cited:
- US-A- 3 051 280
- US-A- 3 085 297
- US-A- 5 251 851
- US-A1- 2008 035 793

## Description

The present embodiments relate to an opening system for a door, and, more particularly, to an opening system for a swiveling aircraft door. The present embodiments further relate to a swiveling aircraft door with such an opening system, and to an aircraft comprising such a swiveling aircraft door.

Doors and hatches are movable barriers that close an opening in a boundary between two environments and provide time-limited access between these two environments. Doors and hatches can be found in many technical applications. Examples for such applications include doors and hatches in aircraft, spacecraft, submarines, trains, vehicles, etc.

To ensure an unimpeded access through the opening in the boundary between the two environments, it is often desirable to arrest the door in an open position, for example to prevent the door from moving back to the closed position due to wind, water, gravity, or any other force.

State-of-the-art solutions that keep a door in an open position can be differentiated based on the opening movement of the door or hatch in solutions for doors or hatches that open predominantly in vertical direction and solutions for doors or hatches that open predominantly in horizontal direction. Common to all state-of-the-art solutions is that a force is usually required to hold the door or hatch in the open position. This force can be generated by gravity, by spring, by hold open rod, by friction, etc. or form fit.

Springs and/or hold open rods usually extend from one extremity of the door or hatch (e.g., the door leaf) to another part of the door or hatch (e.g., the door frame). Unfortunately, springs and/or hold open rods often restrict and/or hinder the access through the opening in the boundary between the two environments. Moreover, springs do not protect against unintended closing of the door or hatch and require maintenance, for example due to the aging of gaskets, while hold open rods require a two-hands operation and take a lot of space for installation.

State-of-the-art solutions for horizontally opening doors usually include a combination of a catch on the door leaf and a counterpart on the door frame. These two parts engage to a form fit when the door reaches the fully open position. Releasing the catch from the counterpart often requires an actuator which is mechanically or electrically connected to the catch and disengages the catch from the counterpart.

Document WO 2020/074449 A1 describes a door of an aircraft. The door is equipped with an opening/closing mechanism, the movement of which in a main horizontal plane of the aircraft is controlled by coupling between the door and the frame on a control and on two front and rear guides, arranged between the respective front and rear door parts, and the frame coupled to at least one handling arm hinged in rotation on a front side of the frame and to the door via a forearm.

Document US 2020/0070947 A1 describes an aircraft door arrangement, comprising a door pivotable between closed and open positions, a frame section in a door opening region, and an articulation arrangement connecting the door and frame section. First and second arms are mounted on the frame section, rotatable about first and second axes, respectively. Third and fourth arms are mounted on the door, rotatable about third and fourth axes, respectively. The second arm, at a first position, is rotatably coupled to the fourth arm about a fifth axis, and at a second position, closer to the second axis, is rotatably coupled to the third arm about a sixth axis. The third arm, at a third position, is rotatably coupled to the first arm about a seventh axis, and at a fourth position, closer to the third axis, is rotatably coupled to the second arm about the sixth axis. All axes are oriented substantially parallel.

Document EP 0 257 699 A3 describes a locking device. The locking device is provided for holding an aircraft door in an open position. The device includes a first member connected to the door which moves in correspondence with door opening and closing. A second member of the device is fixedly connected to an aircraft structure that supports the door. A locking pin, connected to the first member, is engaged with a pin receiving opening in the second member when the door is fully open to hold the door in such position. The pin is movable axially by a manually operated lever to disengage the pin when desired to close the door.

Document US 2,997,751 describes a door that is prevented from striking against the side of the cabin when in open position or from accidentally returning to closed position by a hold-open member comprising a pair of links. The first link is pivotally connected at one end to a suitable cabin structure by a first bolt and has its opposite end hinged to one end of second link by a second bolt. The second link is pivotally connected at its other end to an arm by a third bolt. When the door is swung to its fully open position, the links are drawn to an extended in-line position wherein they restrain inadvertent movements of the door. The lengths of the first and second links, obviously, are of such dimension that they prevent the door from slamming against the side of the airplane when the door is rotated to the open position. A finger tab extending from the second link provides a means for manual grasping of the second link in order to rotate a hinge pin about the axis of the third bolt to break the in-line location of the first and second links when it is desired to close the door.

Document EP 1 379 745 A2 describes a lever that is actuatable to unlatch a pawl when the lever is in an unlocked position. When the lever is in a locked position, lever actuation cannot unlatch the pawl. An over-center device coupled to the lever can be used to position the lever in its locked and unlocked positions. In some embodiments, the lever is moved away from the pawl when the lever is in a locked position and is moved closer to the pawl when the lever is in an unlocked position. In other embodiments, the lever is pivotable about a pivot point that remains in the same location with respect to the lever in the unlocked and locked positions thereof. Although not required, the pawl is preferably movable by the lever to its unlatched state after the partially or fully-actuated lever has been moved to its unlocked state. Documents US2008035793 and US3085297 relate to further prior art door opening systems.

However, the above-described opening systems all lack an option to automatically secure the associated swiveling aircraft door in the open position during an opening operation and to automatically returning the associated swiveling aircraft door from the secured open position to the closed position. Moreover, in the above-described opening systems, the securing function for securing the swiveling aircraft door in its open position and/or for moving the swiveling aircraft door from the secured open position is independent of the opening and/or closing mechanisms of the door.

Some of the above-described opening systems also require a two-hand operation during an opening and/or a closing operation of the swiveling aircraft door. For example, a small finger tab has to be manually grasped which may carry a high risk of injury for the operator of the door.

It is, therefore, an objective to provide a new opening system for a swiveling aircraft door that overcomes the above limitations. In particular, it is an objective to provide a new opening system that automatically secures the swiveling aircraft door in the open position during an opening movement of the swiveling aircraft door and that automatically moves the swiveling aircraft door from the secured open position during a closing movement of the swiveling aircraft door. The new opening system should prevent an unintended closing of the swiveling aircraft door and have an easily accessible opening and release mechanism. Furthermore, it is an objective to provide a new swiveling aircraft door comprising such a new opening system and an aircraft comprising such a swiveling aircraft door.

This objective is solved by the opening system comprising the features of claim 1.

More specifically, an opening system for a swiveling aircraft door that closes an opening in a fuselage of an aircraft in a closed position and provides access to the aircraft through the opening in the fuselage in a fully open position, comprising a hinge bracket, a swivel mechanism, a hold-open latch, and an actuator. The hinge bracket is adapted for pivotally attaching the swiveling aircraft door to the fuselage of the aircraft. The swivel mechanism is rotatably attached to the hinge bracket and adapted for performing an opening swivel movement of the swiveling aircraft door from the closed position to the fully open position and a closing swivel movement of the swiveling aircraft door from the fully open position to the closed position. The hold-open latch is pivotally attached to the swivel mechanism, wherein the hold-open latch is in an unclamped state when the swiveling aircraft door is in the closed position and latches in an over-centered state when the swiveling aircraft door is in the fully open position to prevent the swiveling aircraft door from returning to the closed position. The actuator is fixedly attached to the hold-open latch, wherein the actuator acts on the hold-open latch that in turn acts on the swivel mechanism, thereby performing the opening and closing swivel movements of the swiveling aircraft door.

An actively driven door opening mechanism may arrest mechanically in one or both end-positions (i.e., in the fully open or in the closed position) and can be disengaged by an active motion of the driving lever of the mechanism. In particular, the open-close swivel movement is actively driven.

Exemplary, the swivel movement will be actively driven by a vertical shaft for a swiveling aircraft door. The vertical shaft may be attached to a hinge arm. This vertical shaft may be actively driven by an actuator. Illustratively, the actuator may be electric, pneumatic, or a manually-activated handle.

The rotation of the vertical shaft results in a swivel movement of the door leaf via the swivel mechanism until the door reaches its fully open position, limited by the shaft rotation. This limit is ensured by the alignment of a lever on the vertical shaft with its connected rod to the swivel mechanism.

A further rotation of the vertical shaft may result in a movement of the door back towards the door's closing direction. At the same time, the further rotation brings the hold-open latch in an over-centered state in which the hold-open latch is stopped by a stop, thereby preventing the swiveling aircraft door from returning to the closed position.

The lever on the vertical shaft pushes against the stop and defines the door's arrest position. The door's position may be changed by an active driving of the vertical shaft. Otherwise, the vertical shaft's position is hold by the engaged actuator, an additional mechanical element, or similar features.

If the door is pushed in direction of the door's closed position, e.g., by wind loads or mishandling, the hold-open latch is pushed in over-center direction towards its arrest position and the fully open position is secured.

In the unlikely event of a failure of the actively driven shaft, e.g., caused by a power loss, broken handle, etc., a stop lever may release the door from its arrest function. The stop lever is able to push the lever on the shaft back over its aligned position so that the door can easily swivel back to its closed position by pulling and/or pushing the door structure.

Advantageously, the actively driven open motion results in a latching of the door in the fully open position, and the actively driven closing motion disengages from the latching of the door using only one operating element.

Thereby, the door is secured in the over-centered state by an additional mechanical element. Moreover, a separate interface on the door frame side may be omitted.

According to one aspect, the hold-open latch further comprises a rod having a first end and a second end, wherein the first end is pivotally attached to the swivel mechanism; and a lever having a third end and a fourth end, wherein the third end is pivotally attached to the second end of the rod and the fourth end is fixedly attached to the actuator.

According to one aspect, at least one of the rod or the lever is fork-shaped.

According to one aspect, the opening system further comprises a drive shaft that is fixedly attached between the actuator and the hold-open latch.

According to one aspect, the actuator further comprises an electric motor that is adapted for turning the drive shaft to perform the opening and closing swivel movements of the swiveling aircraft door.

According to one aspect, the actuator further comprises a handle that is adapted for turning the drive shaft to perform the opening and closing swivel movements of the swiveling aircraft door.

The opening system further comprises a stop that is adapted for stopping the hold-open latch in the over-centered state.

The opening system further comprises a release system that is coupled to the stop and adapted for transitioning the hold-open latch from the over-centered state to the unclamped state.

According to one aspect, the release system further comprises a release lever that is pivotally attached to the hinge bracket at a release lever attachment point and fixedly attached to the stop.

According to one aspect, the release system further comprises a remote actuator that is adapted for pivoting the release lever around the release lever attachment point.

According to one aspect, the release system further comprises a connecting element that connects the remote actuator with the release lever and that transforms a movement of the remote actuator into a movement of the release lever.

According to one aspect, the opening system further comprises securing means for securing the hold-open latch in the over-centered state.

According to one aspect, the securing means further comprise a spring-forced pin that is attached to the hinge bracket and to the hold-open latch and that preloads the hold-open latch such that the hold-open latch remains in the over-centered state.

Furthermore, a swiveling aircraft door may comprise the opening system described above.

Moreover, an aircraft may comprise the swiveling aircraft door described above.

Preferred embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative aircraft having several swiveling aircraft doors in accordance with some embodiments,
- Figure 2A is a schematic diagram of an illustrative opening system for a swiveling aircraft door with an actuator and a hold-open latch that is in an unclamped state in accordance with some embodiments,
- Figure 2B is a schematic diagram of the illustrative opening system for the swiveling aircraft door of Figure 2A with the hold-open latch in an aligned state in accordance with some embodiments,
- Figure 2C is a schematic diagram of the illustrative opening system for the swiveling aircraft door of Figure 2A with the hold-open latch in an over-centered state in accordance with some embodiments,
- Figure 3A is a diagram of an illustrative swiveling aircraft door for an aircraft in accordance with some embodiments,
- Figure 3B is a cross sectional diagram of the illustrative swiveling aircraft door of Figure 3A in the closed position in accordance with some embodiments,
- Figure 3C is a cross sectional diagram of the illustrative swiveling aircraft door of Figure 3A in a partially open position in accordance with some embodiments,
- Figure 3D is a cross sectional diagram of the illustrative swiveling aircraft door of Figure 3A in the fully open position in accordance with some embodiments,
- Figure 4 is a diagram of an illustrative opening system for a swiveling aircraft door in accordance with some embodiments,
- Figure 5A is a cross sectional diagram of the illustrative opening system of Figure 4 when the swiveling aircraft door is in the closed position and the hold-open latch in a first unclamped state in accordance with some embodiments,
- Figure 5B is a cross sectional diagram of the illustrative opening system of Figure 4 when the swiveling aircraft door is in a partially open position and the hold-open latch in a second unclamped state in accordance with some embodiments, and
- Figure 5C is a cross sectional diagram of the illustrative opening system of Figure 4 when the swiveling aircraft door is in the fully open position and the hold-open latch in the over-centered state in accordance with some embodiments.

Exemplary embodiments may be used with any door or hatch that closes a boundary between two environments. In particular, exemplary embodiments may be used with any vehicle having a door or hatch. Preferably, the door or hatch closes an outside boundary of the vehicle, whereby the door or hatch provides access to the interior of the vehicle from the outside of the vehicle. Examples for vehicles may include aircraft such as airplanes, quadcopters, helicopters, and drones, land-based vehicles including cars, buses, trucks, and motorcycles, or vessels such as ships and boats, etc.

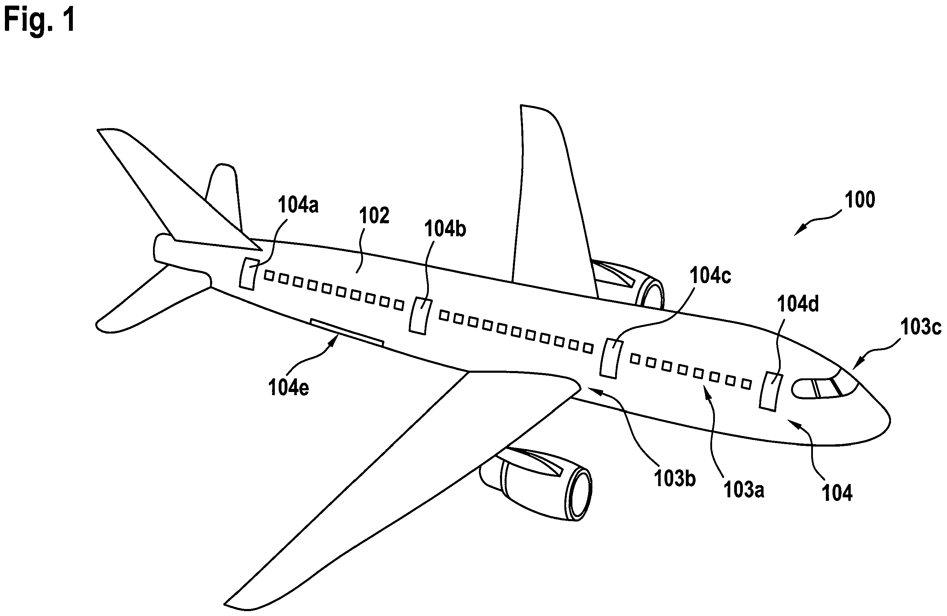

Figure 1 shows an aircraft 100 with an aircraft airframe 102, which is sometimes also referred to as fuselage 102. Illustratively, the aircraft 100 comprises a passenger cabin 103a, a cargo deck 103b, and a flight deck or cockpit 103c. If desired, the aircraft 100 is accessible via a plurality of aircraft doors 104, which exemplarily comprises several cabin access doors 104a, 104b, 104c, and 104d, as well as one or more cargo deck access doors 104e. By way of example, the passenger cabin 103a and the flight deck 103c are accessible via the cabin access doors 104a, 104b, 104c and 104d, and the cargo deck 103b is accessible via the one or more cargo deck access doors 104e.

The plurality of aircraft doors 104 may be adapted to close the aircraft airframe 102 in a fluid-tight manner. If desired, at least one of the plurality of aircraft doors 104 is a swiveling aircraft door.

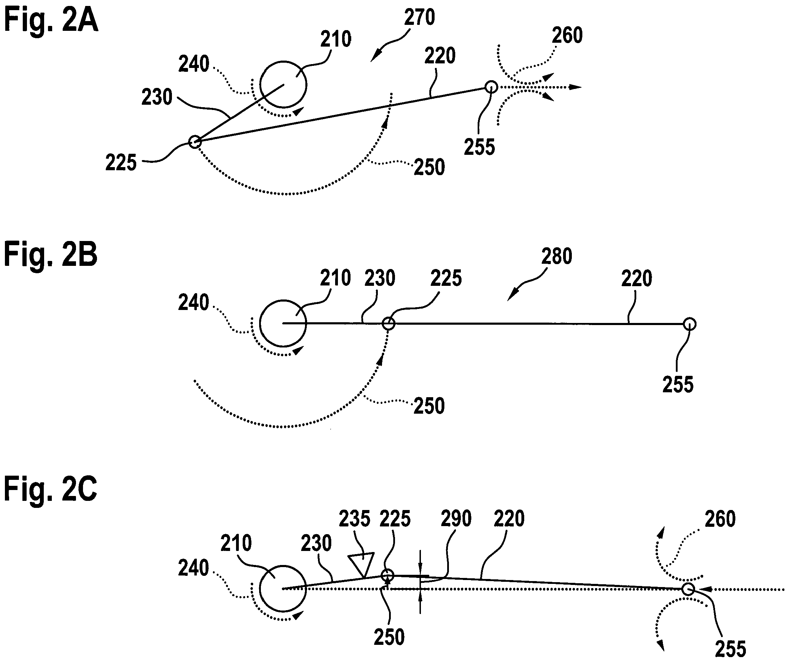

If desired, aircraft 100 may include at least one swiveling aircraft door 200 as described below with reference to Figure 2 to Figure 4. In other words, one or more of the plurality of aircraft doors 104 may be a swiveling aircraft door 200 as described below with reference to Figure 2 to Figure 4.

Illustratively, the swiveling aircraft door may be movable between a closed position and an open position. In the closed position, the swiveling aircraft door may close an opening in the fuselage 102, thereby preventing access from outside the aircraft 100. In the open position, the swiveling aircraft door may provide access from outside the fuselage 102 to the aircraft passenger cabin 103a, the aircraft cargo deck 103b, and/or the aircraft flight deck 103c.

For the remainder of the description, the swiveling aircraft door is said to be in the closed position when the swiveling aircraft door completely closes the opening in the fuselage 102. As an example, the swiveling aircraft door may at least airtightly close the opening in the fuselage 102 when the swiveling aircraft door completely closes the opening in the fuselage 102. As another example, the swiveling aircraft door may prevent unauthorized access to the fuselage 102 when the swiveling aircraft door completely closes the opening in the fuselage 102.

Furthermore, the swiveling aircraft door is said to be in a partially open position when the swiveling aircraft door partially closes the opening in the fuselage 102, and the swiveling aircraft door is said to be in the fully open position when the opening in the fuselage 102 is free of the swiveling aircraft door. For example, no part of the opening in the fuselage 102 is covered by the swiveling aircraft door in the fully open position.

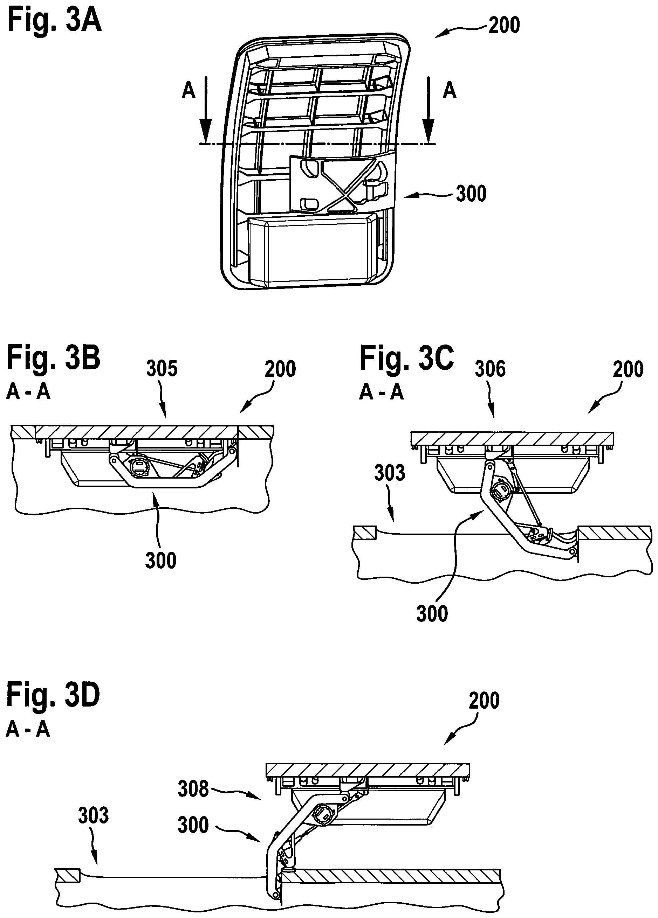

The swiveling aircraft door 200 may include an opening system such as opening system 300 of Figure 3B to Figure 5C described below.

As shown in Figure 1, aircraft 100 is embodied by an airplane. However, the present embodiments are not limited to airplanes. Instead, any door that closes a boundary between two environments is likewise contemplated. By way of example, the present door may alternatively be applied to other aircrafts such as helicopters, drones, multicopters, etc., to other vehicles such as ships, spacecrafts, submarines, and so on.

Consequently, the present door is not limited to aircraft doors, but can likewise be applied to any arbitrary door that closes a boundary between two environments. However, for purposes of illustration, the present door is hereinafter described with respect to swiveling aircraft doors.

Figure 2A shows a schematic diagram of an illustrative opening system for a swiveling aircraft door with an actuator 210 and a hold-open latch that is in an unclamped state 270. Illustratively, the swiveling aircraft door may be in the closed position.

As shown in Figure 2A, the hold-open latch may include a lever 230 and a rod 220. Illustratively, the lever 230 may be non-rotatably attached to the actuator 210 and rotatably attached to the rod 220 at a lever-rod connection 225. The rod 220 may be connected to a hinge arm of the swiveling aircraft door at a rod-hinge arm connection 255.

During the opening of the swiveling aircraft door, the actuator 210 may rotate in a counterclockwise direction as shown by movement 240 of Figure 2A. As a result, the lever 230 may rotate with the actuator 210 in counterclockwise direction such that the rotatable lever-rod connection 225 between the lever 230 and the rod 220 performs movement 250, which in turn results in movement 260 of the rod-hinge arm connection 255.

Illustratively, the actuator 210 may be actively driven. For example, the actuator 210 may be electrically, pneumatically, or manually driven. As an example, the actuator 210 may include an electric motor. As another example, the actuator 210 may include a handle.

Figure 2B is a schematic diagram of the illustrative opening system of Figure 2A with the hold-open latch in the aligned state 280. Illustratively, when the hold-open latch is in the aligned state, the lever 230 is aligned with the rod 220, the rod-hinge arm connection 255 is furthest away from the actuator 210, and the swiveling aircraft door is in the fully open position.

Compared to Figure 2A, the opening system of Figure 2B has performed movement 250 of the lever-rod connection 225.

Figure 2C is a schematic diagram of the illustrative opening system of Figure 2A with the hold-open latch in an over-centered state 290. Illustratively, the opening system may include a stop 235. The stop 235 may be adapted for stopping the hold-open latch in the over-centered state 290.

Compared to Figure 2B, the opening system of Figure 2C has performed movement 250 of the lever-rod connection 225. As a result, the rod-hinge arm connection 255 may have performed movement 260. When the hold-open latch is in the over-centered state 290, the swiveling aircraft door is still be in the fully open position.

If the swiveling aircraft door that includes opening system is pushed further in direction of movement 260 (e.g., by wind loads or by mishandling), the lever 230 is pushed in direction of stop 235. Thus, the hold-open latch is latched in the over-centered state 290 and the swiveling aircraft door is in a secured position.

Illustratively, the position of the swiveling aircraft door from the secured position requires an active movement of lever 230 away from the stop 235. For example, a movement of actuator 210 in a clockwise direction, i.e., in a direction that is opposite of the direction of movement 240 may move the lever 230 away from the stop 235 and ultimately result in a transition of the hold-open latch from the over-centered state 290 through the aligned state (e.g., aligned state 280 of Figure 2B) to the unclamped state (e.g., unclamped state 270 of Figure 2A).

Figure 3A is a diagram of an illustrative swiveling aircraft door 200 for an aircraft (e.g., aircraft 100 of Figure 1). The swiveling aircraft door 200 may close an opening in a fuselage of an aircraft in a closed position and provide access to the aircraft through the opening in the fuselage in a fully open position. If desired, the swiveling aircraft door 200 may include an opening system 300.

Figure 3B is a cross sectional diagram of the illustrative swiveling aircraft door 200 of Figure 3A in the closed position 305. In the closed position 305, the swiveling aircraft door 200 completely closes an opening in the fuselage of an aircraft. The swiveling aircraft door 200 may include an opening system 300. As shown in Figure 3B, the opening system 300 includes a hold-open latch that is in an unclamped state.

Figure 3C is a cross sectional diagram of the illustrative swiveling aircraft door 200 of Figure 3A in a partially open position 306. In the partially open position 306, the swiveling aircraft door 200 partially closes the opening 303 in the fuselage of the aircraft. As shown in Figure 3C, the opening system 300 is in the unclamped state.

Figure 3D is a cross sectional diagram of the illustrative swiveling aircraft door of Figure 3A in the fully open position 308. In the fully open position 308, the swiveling aircraft door 200 provides unhindered access through the opening 303 in the fuselage. As shown in Figure 3D, the opening system 300 is in the over-centered state in which the fully-open position of the swiveling aircraft door 200 is secured.

The opening system 300 of Figure 3B to Figure 3D includes an actuator that actively drives the opening and closing movements of the swiveling aircraft door 200. As shown in Figure 3B to Figure 3D, the actuator acts on the hold-open latch that in turn acts on the swivel mechanism, thereby performing the opening and closing swivel movements of the swiveling aircraft door 200.

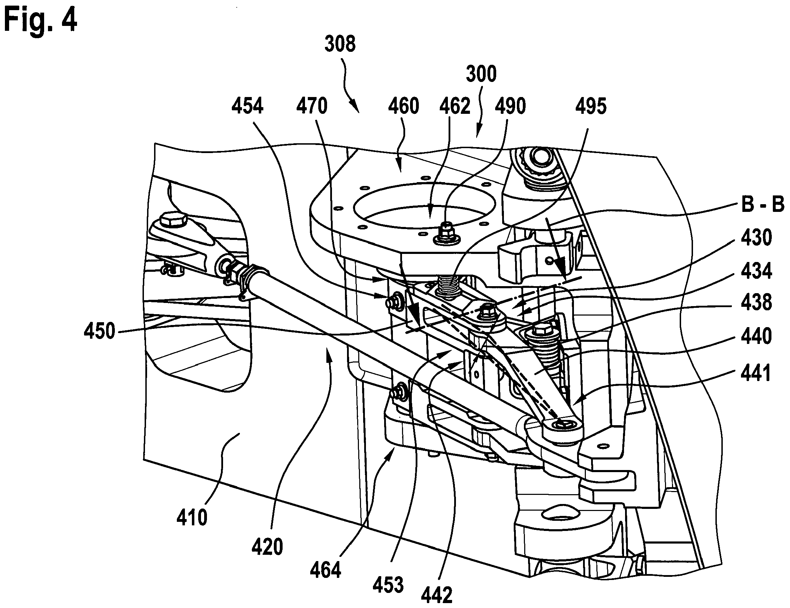

Figure 4 is a diagram of an illustrative opening system 300 for a swiveling aircraft door (e.g., swiveling aircraft door 200 of Figure 3A to Figure 3D or one of aircraft doors 104 of aircraft 100 of Figure 1). The swiveling aircraft door closes an opening in a fuselage of an aircraft in a closed position (e.g., closed position 305 of Figure 3B) and provides access to the aircraft through the opening in the fuselage in a fully open position (e.g., fully open position 308 of Figure 3D).

As shown in Figure 4, the opening system 300 includes a hinge bracket 410, a swivel mechanism 420, a hold-open latch 430, and an actuator 460. The hinge bracket 410 is adapted for pivotally attaching the swiveling aircraft door to the fuselage of the aircraft.

The swivel mechanism 420 is rotatably attached to the hinge bracket 410 and adapted for performing an opening swivel movement of the swiveling aircraft door from the closed position (e.g., closed position 305 of Figure 3B) to the fully open position 308 and a closing swivel movement of the swiveling aircraft door from the fully open position 308 to the closed position.

The hold-open latch 430 is pivotally attached to the swivel mechanism 420. The hold-open latch 430 is in an unclamped state when the swiveling aircraft door is in the closed position and latches in an over-centered state 434 when the swiveling aircraft door is in the fully open position 308 to prevent the swiveling aircraft door from returning to the closed position.

The actuator 460 is fixedly attached to the hold-open latch 430. The actuator 460 acts on the hold-open latch 430 that in turn acts on the swivel mechanism 420, thereby performing the opening and closing swivel movements of the swiveling aircraft door.

Illustratively, the hold-open latch 430 may include a rod 440 having a first end 441 and a second end 442 and a lever 450 having a third end 453 and a fourth end 454. By way of example, the first end 441 of the rod 440 may be pivotally attached to the swivel mechanism 420. Preferably, the rod 440 and the swivel mechanism 420 may move relative to each other in a first predetermined plane. For example, the first end 441 of the rod 440 and the swivel mechanism 420 may form a hinge joint at the attachment point that limits the pivotal movement of the rod 440 and the swivel mechanism 420 relative to each other to the first predetermined plane.

The second end 442 of the rod 440 may be pivotally attached to the third end 453 of the lever 450. Preferably, the rod 440 and the lever 450 may move relative to each other in a second predetermined plane. For example, the second end 442 of the rod 440 and the third end 453 of the lever 450 may form a hinge joint at the attachment point that limits the pivotal movement of the rod 440 and the lever 450 relative to each other to the second predetermined plane. Preferably, the first and second predetermined planes are at least parallel to each other.

The fourth end of the lever 454 may be fixedly attached to the actuator 460. By way of example, the opening system 300 may include a drive shaft 470. The drive shaft 470 may be fixedly attached between the actuator 460 and the hold-open latch 430. For example, the drive shaft 470 may be attached to the fourth end 454 of the lever 450.

If desired, at least one of the rod 440 or the lever 450 may be fork-shaped. As an example, the second end 442 of the rod 440 may be fork-shaped. As another example, the third end 453 of the lever 450 may be fork-shaped.

Illustratively, the actuator 460 may include a device that is adapted for turning the drive shaft 470 and thereby the lever 450 to perform the opening and closing movements of the swiveling aircraft door. Alternatively, the device may be adapted for turning the lever 450 directly to perform the opening and closing swivel movements of the swiveling aircraft door.

The device may be operated electrically, pneumatically, or hydraulically. One or more switches may be used to turn the device on and off. If desired, the device may be an electric motor 462.

By way of example, the actuator may include a handle 464. The handle 464 may be adapted for turning the drive shaft 470 and thereby the lever 450 to perform the opening and closing movements of the swiveling aircraft door. Alternatively, the handle 464 may be adapted for turning the lever 450 directly to perform the opening and closing swivel movements of the swiveling aircraft door.

Illustratively, the actuator 460 may include an electrically, pneumatically, or hydraulically operated device and a handle 464. In such a configuration, the handle 464 may be used as a back-up actuator in case the electrically, pneumatically, or hydraulically operated device is non-operational.

As shown in Figure 4, the hold-open latch 430 may be in an over-centered state 434. In the over-centered state 434, the attachment between the rod 440 and the lever 450 of the hold-open latch 430 may have a distance 438 from the aligned state, which is sometimes also referred to as the center state. If desired, a stop may limit the distance 438 between the position of the attachment of the rod 440 with the lever 450 in the over-centered state 434 and the position of the attachment of the rod 440 with the lever 450 in the aligned state.

Illustratively, the opening system 300 may include securing means 490 for securing the hold-open latch 430 in the over-centered state 434. If desired, the securing means 490 may include a preloaded device that exerts a force on the hold-open latch 430 from the aligned state in direction of the over-centered state 434.

For example, the securing means 490 may include a spring-forced pin 495. The spring-forced pin 495 may be attached to the hinge bracket 410 and to the hold-open latch 430. The spring-forced pin 495 may preload the hold-open latch 430 such that the hold-open latch 430 remains in the over-centered state 434.

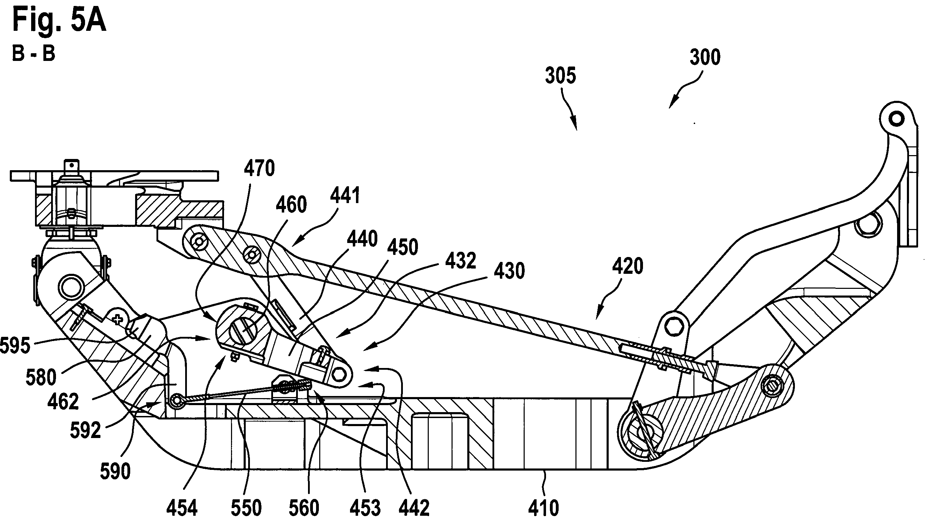

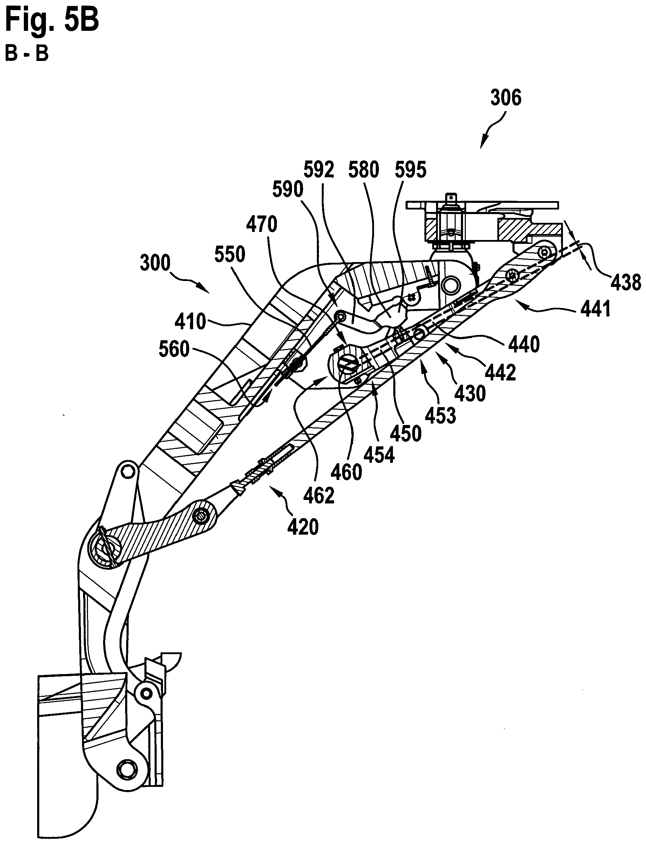

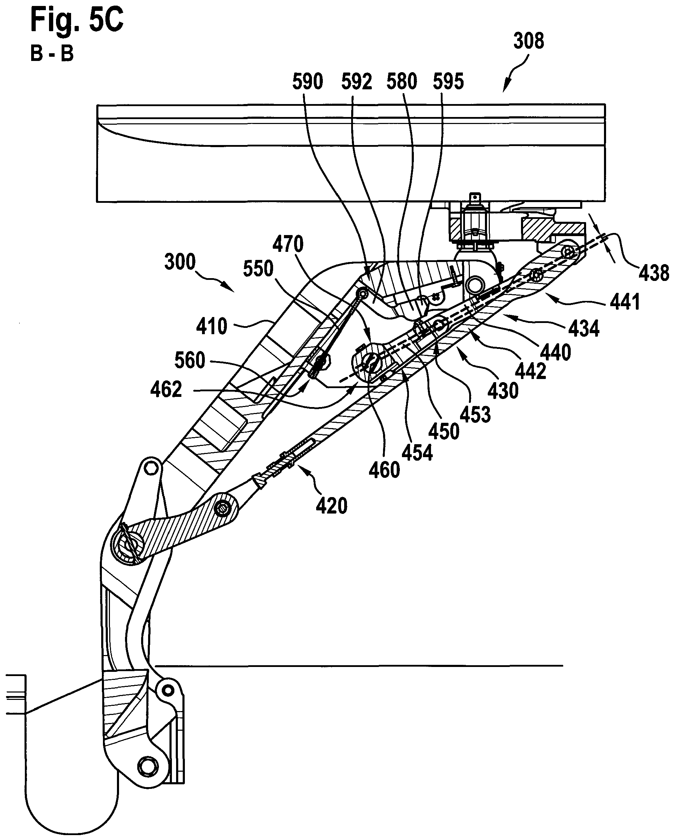

Figure 5A, Figure 5B, and Figure 5C are cross sectional diagrams of the illustrative opening system 300 of Figure 4. In Figure 5A, the corresponding swiveling aircraft door is shown in the closed position 305 and the hold-open latch 430 in a first unclamped state 432. In Figure 5B, the corresponding swiveling aircraft door is shown in a partially open position and the hold-open latch in a second unclamped state. In Figure 5C, the corresponding swiveling aircraft door is shown in the fully open position and the hold-open latch in the over-centered state.

During the opening operation of the swiveling aircraft door from the closed position 305 of Figure 5A via the partially open position 306 of Figure 5B to the fully open position 308 of Figure 5C, the hold-open latch 430 of the opening system 300 transitions from the first unclamped state 432 of Figure 5A via the second unclamped state of Figure 5B and the aligned state to the over-centered state 434 of Figure 5C.

During the opening operation, the actuator 460 that is fixedly attached to the hold-open latch 430 acts on the hold-open latch 430 that in turn acts on the swivel mechanism 420, thereby performing the opening swivel movement of the swiveling aircraft door. In particular, the actuator 460 may perform a rotation, and the lever 450 of the hold-open latch 430 that is directly or via a drive shaft fixedly connected to the actuator 460 may perform a rotation in the same direction as the actuator 460.

As a result, the end 453 of the lever 450 that is pivotally attached to the end 442 of the rod 440 may perform a circular movement around the actuator 460, thereby pushing the rod 440. The circular movement of the end 453 of the lever 450 may start in the position shown in Figure 5A and end in the position shown in Figure 5C.

The rod 440 that is pivotally attached to the swivel mechanism 420 may move the swivel mechanism 420, which in turn acts on the hinge bracket 410 such that the swiveling aircraft door swivels away from the opening in the fuselage.

Illustratively, the opening motion of the swiveling aircraft door may be limited by the total length of the lever 450 and the rod 440 of the hold-open latch 430. In the widest open position of the swiveling aircraft door, the lever 450 and the rod 440 are aligned such that the hold-open latch 430 is in the aligned state.

A further rotation of the actuator 460 in opening direction may result in a movement of the swiveling aircraft door in closing direction and a transition of the hold-open latch 430 from the aligned state to the over-centered state 434 shown in Figure 5C.

The opening system 300 includes a stop 580. The stop 580 is adapted for stopping the hold-open latch 430 in the over-centered state 434. If desired, the stop 580 may restrict a further rotation of the actuator 460 in opening direction beyond the over-centered state 434 shown in Figure 5C.

Illustratively, the stop 580 may be positioned such that the stop 580 touches the lever 450 when the hold-open latch 430 is in the over-centered state 434. If desired, the stop 580 may be positioned elsewhere. As an example, the stop 580 may be positioned such that it touches the attachment between the lever 450 and the rod 440 when the hold-open latch 430 is in the over-centered state 434. As another example, the stop 580 may be positioned such that it touches the rod 440 when the hold-open latch 430 is in the over-centered state 434.

During the closing operation of the swiveling aircraft door from the fully open position 308 of Figure 5C via the partially open position 306 of Figure 5B to the closed position 305 of Figure 5A, the hold-open latch 430 of the opening system 300 transitions from the over-centered state 434 of Figure 5C via the aligned state and the second unclamped state of Figure 5B to the first unclamped state 432 of Figure 5A.

During the closing operation, the actuator 460 that is fixedly attached to the hold-open latch 430 acts on the hold-open latch 430 that in turn acts on the swivel mechanism 420, thereby performing the closing swivel movement of the swiveling aircraft door. In particular, the actuator 460 may perform a rotation, and the lever 450 of the hold-open latch 430 that is directly or via a drive shaft connected to the actuator 460 may perform a rotation in the same direction as the actuator 460.

As a result, the end 453 of the lever 450 that is pivotally attached to the end 442 of the rod 440 may perform a circular movement around the actuator 460, thereby pulling on the rod 440. The circular movement of the end 453 of the lever 450 may start at the stop 580 as shown in Figure 5C and end in the position shown in Figure 5A.

The rod 440 that is pivotally attached to the swivel mechanism 420 may move the swivel mechanism 420, which in turn acts on the hinge bracket 410 such that the swiveling aircraft door swivels towards the opening in the fuselage.

If desired, the rod 440 may be directly attached to the hinge bracket 410 of the swiveling aircraft door, and the rod 440 may act on the hinge bracket 410 such that the swiveling aircraft door swivels towards the opening in the fuselage.

The opening system 300 includes a release system 590. The release system 590 is adapted for transitioning the hold-open latch 430 from the over-centered state 434 shown in Figure 5C to the unclamped state 432 shown in Figure 5B. For example, the release system 590 may be used to transition the hold-open latch 430 from the over-centered state 434 of Figure 5C to the unclamped state 432 of Figure 5B in case of a malfunction of actuator 460.

The release system 590 is coupled to the stop 580. Illustratively, the release system 590 may include a release lever 592. The release lever 592 may be pivotally attached to the hinge bracket 410 at a release lever attachment point 595 and fixedly attached to the stop 580. Thus, a rotation of the release lever 592 around the release lever attachment point 595 may push the stop 580 against the hold-open latch 430 such that the hold-open latch 430 transitions from the over-centered state 434 of Figure 5C at least to the unclamped state 432 of Figure 5B.

Illustratively, the release system 590 may include a remote actuator 560. The remote actuator 560 may be adapted for pivoting the release lever 592 around the release lever attachment point 595. Preferably, the remote actuator 560 may be a mechanical actuator. For example, the remote actuator 560 may include a handle that is pushed, pulled, or pivoted.

By way of example, the release system 590 may include a connecting element 550. The connecting element 550 may connect the remote actuator 560 with the release lever 592 and transform a movement of the remote actuator 560 into a movement of the release lever 592. For example, the connecting element 550 may include a Bowden cable, a string, or a rod, and the remote actuator 560 may include a handle that is pulled. In this example, a pull on the handle may cause a pull on the Bowden cable, the string, or the rod, which may cause a pull on the release lever 592 and thereby a movement of the stop 580 in direction of the hold-open latch 430.

It should be noted that modifications to the above described embodiments are within the common knowledge of the person skilled in the art and, thus, also considered as being part of the present invention.

For example, the release lever 592 of Figures 5A to 5C is shown as an arm with the release lever attachment point 595 being situated on the stop 580. However, the release lever 592 may be implemented by a rocker arm such that the release lever attachment point 595 is situated between the stop 580 and the connecting element 550. In such an implementation, the connecting element 550 may push against the release lever 592 such that the stop 580 moves in direction of the hold-open latch 430. Thus, in such an implementation, the connecting element 550 is preferably a rod.

Moreover, the hold-open latch 430 of Figures 4 to 5C requires a stop 580 to limit the movement of the hold-open latch 430 in the over-centered state 434. However, if desired, the attachment between the rod 440 and the lever 450 of the hold-open latch 430 may include a hinge that restricts the movement of the rod 440 relative to the lever 450 to a limited arc beyond the aligned state of the hold-open latch. Thus, the stop 580 may be omitted, which does not fall under the scope of the claims.

Furthermore, the release system 590 of Figures 5A to 5C is shown to push against the hold-open latch 430 such that the hold-open latch 430 transitions from the over-centered state 434 of Figure 5C to the unclamped state 432 of Figure 5B. However, if desired, the release system 590 may be implemented to pull on the hold-open latch 430 (i.e., on either the rod 440 or the lever 450) in a direction that points from the over-centered state towards the unclamped state (i.e., from the side that is opposite the side against which the release system 590 of Figure 5C pushes).

### Reference List

- 100: aircraft
- 102: aircraft airframe, fuselage
- 103a: aircraft passenger cabin
- 103b: aircraft cargo deck
- 103c: aircraft flight deck
- 104: aircraft door
- 104a, 104b, 104c, 104d: cabin access doors
- 104e: cargo deck access door
- 200: swiveling aircraft door
- 210: actuator
- 220: rod
- 225: lever-rod connection
- 230: lever
- 235: stop
- 240: movement of the actuator
- 250: movement of the lever-rod connection
- 255: rod-hinge arm connection
- 260: movement of the rod-hinge arm connection
- 270: unclamped state
- 280: aligned state
- 290: over-centered state
- 300: opening system
- 303: opening
- 305: closed position
- 306: partially open position
- 308: fully open position
- 410: hinge bracket
- 420: swivel mechanism
- 430: hold-open latch
- 432: unclamped state
- 434: over-centered state
- 438: distance from center state
- 440: rod
- 441, 442: end of rod
- 450: lever
- 453, 454: end of lever
- 460: actuator
- 462: electric motor
- 464: handle
- 470: drive shaft
- 490: securing means
- 495: spring-forced pin
- 550: connecting element
- 560: remote actuator
- 580: stop
- 590: release system
- 592: release lever
- 595: release lever attachment point

## Claims

1. An opening system (300) for a swiveling aircraft door (200) that closes an opening (303) in a fuselage (102) of an aircraft (100) in a closed position (305) and provides access to the aircraft (100) through the opening (303) in the fuselage (102) in a fully open position (308), the opening system (300) comprises:
a hinge bracket (410) that is adapted for pivotally attaching the swiveling aircraft door (200) to the fuselage (102) of the aircraft (100);
a swivel mechanism (420) that is rotatably attached to the hinge bracket (410) and adapted for performing an opening swivel movement of the swiveling aircraft door (200) from the closed position (305) to the fully open position (308) and a closing swivel movement of the swiveling aircraft door (200) from the fully open position (308) to the closed position (305);
a hold-open latch (430) that is pivotally attached to the swivel mechanism (420), wherein the hold-open latch (430) is in an unclamped state (432) when the swiveling aircraft door (200) is in the closed position (305) and latches in an over-centered state (434) when the swiveling aircraft door (200) is in the fully open position (308) to prevent the swiveling aircraft door (200) from returning to the closed position (305); and
an actuator (460) that is fixedly attached to the hold-open latch (430), wherein the actuator (460) acts on the hold-open latch (430) that in turn acts on the swivel mechanism (420), thereby performing the opening and closing swivel movements of the swiveling aircraft door (200); the opening system (300) further comprising a stop (580) that is adapted for stopping the hold-open latch (430) in the over-centered state (434); wherein the opening system is **characterized by** a release system (590) that is coupled to the stop (580) and adapted for transitioning the hold-open latch (430) from the over-centered state (434) to the unclamped state (432).

2. The opening system (300) of claim 1, wherein the hold-open latch (430) further comprises:
a rod (440) having a first end (441) and a second end (442), wherein the first end (441) is pivotally attached to the swivel mechanism (420); and
a lever (450) having a third end (453) and a fourth end (454), wherein the third end (453) is pivotally attached to the second end (442) of the rod (440) and the fourth end (454) is fixedly attached to the actuator (460).

3. The opening system (300) of claim 2, wherein at least one of the rod (440) or the lever (450) is fork-shaped.

4. The opening system (300) of any one of claims 1 to 3, further comprising:
a drive shaft (470) that is fixedly attached between the actuator (460) and the hold-open latch (430).

5. The opening system (300) of claim 4, wherein the actuator (460) further comprises:
an electric motor (462) that is adapted for turning the drive shaft (470) to perform the opening and closing swivel movements of the swiveling aircraft door (200).

6. The opening system (300) of any one of claims 4 or 5, wherein the actuator (460) further comprises:
a handle (464) that is adapted for turning the drive shaft (470) to perform the opening and closing swivel movements of the swiveling aircraft door (200).

7. The opening system (300) of any one of the preceding claims, further comprises:
a release lever (592) that is pivotally attached to the hinge bracket (410) at a release lever attachment point (595) and fixedly attached to the stop (580).

8. The opening system (300) of claim 7, wherein the release system (590) further comprises:
a remote actuator (560) that is adapted for pivoting the release lever (592) around the release lever attachment point (595).

9. The opening system (300) of claim 8, wherein the release system (590) further comprises:
a connecting element (550) that connects the remote actuator (560) with the release lever (592) and that transforms a movement of the remote actuator (560) into a movement of the release lever (592).

10. The opening system (300) of any one of the preceding claims, further comprising:
securing means (490) for securing the hold-open latch (430) in the over-centered state (434).

11. The opening system (300) of claim 10, wherein the securing means (490) further comprise:
a spring-forced pin (495) that is attached to the hinge bracket (410) and to the hold-open latch (430) and that preloads the hold-open latch (430) such that the hold-open latch (430) remains in the over-centered state (434).

12. A swiveling aircraft door (200) comprising the opening system (300) of any one of the preceding claims.

13. An aircraft (100) comprising the swiveling aircraft door (200) of claim 12.

## Patentansprüche

1. Öffnungssystem (300) für eine Flugzeugschwenktür (200), das in einer geschlossenen Position (305) eine Öffnung (303) in einem Rumpf (102) eines Flugzeugs (100) verschließt und in einer vollständig geöffneten Position (308) Zugang zu dem Flugzeug (100) durch die Öffnung (303) in dem Rumpf (102) ermöglicht, wobei das Öffnungssystem (300) umfasst:
eine Scharnierhalterung (410), die zum schwenkbaren Befestigen der Flugzeugschwenktür (200) am Rumpf (102) des Flugzeugs (100) ausgelegt ist;
einen Schwenkmechanismus (420), der drehbar an der Scharnierhalterung (410) angebracht ist und ausgelegt ist, eine Öffnungsschwenkbewegung der Flugzeugschwenktür (200) von der geschlossenen Position (305) in die vollständig geöffnete Position (308) und eine Schließschwenkbewegung der Flugzeugschwenktür (200) von der vollständig geöffneten Position (308) in die geschlossene Position (305) durchzuführen;
einen Offenhalteriegel (430), der schwenkbar an dem Schwenkmechanismus (420) angebracht ist, wobei sich der Offenhalteriegel (430) in einem ungeklemmten Zustand (432) befindet, wenn sich die Flugzeugschwenktür (200) in der geschlossenen Position (305) befindet, und in einem überzentrierten Zustand (434) verriegelt, wenn sich die Flugzeugschwenktür (200) in der vollständig offenen Position (308) befindet, um zu verhindern, dass die Flugzeugschwenktür (200) in die geschlossene Position (305) zurückkehrt; und
einen Aktuator (460), der fest an dem Offenhalteriegel (430) angebracht ist, wobei der Aktuator (460) auf den Offenhalteriegel (430) wirkt, der wiederum auf den Schwenkmechanismus (420) wirkt, wodurch die Öffnungs- und Schließschwenkbewegungen der Flugzeugschwenktür (200) ausgeführt werden; wobei das Öffnungssystem (300) ferner einen Anschlag (580) umfasst, der ausgelegt ist, den Offenhalteriegel (430) in dem überzentrierten Zustand (434) anzuhalten; wobei das Öffnungssystem durch ein Freigabesystem (590) gekennzeichnet ist, das mit dem Anschlag (580) gekoppelt ist und ausgelegt ist, den Offenhalteriegel (430) von dem überzentrierten Zustand (434) in den ungeklemmten Zustand (432) zu überführen.

2. Öffnungssystem (300) nach Anspruch 1, bei dem der Offenhalteriegel (430) ferner umfasst:
eine Stange (440) mit einem ersten Ende (441) und einem zweiten Ende (442), wobei das erste Ende (441) schwenkbar an dem Schwenkmechanismus (420) angebracht ist; und
einen Hebel (450) mit einem dritten Ende (453) und einem vierten Ende (454), wobei das dritte Ende (453) schwenkbar an dem zweiten Ende (442) der Stange (440) befestigt ist und das vierte Ende (454) fest an dem Aktuator (460) angebracht ist.

3. Öffnungssystem (300) nach Anspruch 2, bei dem die Stange (440) und/oder der Hebel (450) gabelförmig ist.

4. Öffnungssystem (300) nach einem der Ansprüche 1 bis 3, ferner mit einer Antriebswelle (470), die fest zwischen dem Aktuator (460) und dem Offenhalteriegel (430) angebracht ist.

5. Öffnungssystem (300) nach Anspruch 4, bei dem der Aktuator (460) ferner umfasst:
einen Elektromotor (462), der zum Drehen der Antriebswelle (470) ausgelegt ist, um die Öffnungs- und Schließschwenkbewegungen der Flugzeugschwenktür (200) durchzuführen.

6. Öffnungssystem (300) nach einem der Ansprüche 4 oder 5, bei dem der Aktuator (460) ferner umfasst:
einen Griff (464), der zum Drehen der Antriebswelle (470) ausgelegt ist, um die Öffnungs- und Schließschwenkbewegungen der Flugzeugschwenktür (200) auszuführen.

7. Öffnungssystem (300) nach einem der vorhergehenden Ansprüche, ferner mit
einem Freigabehebel (592), der an einem Freigabehebel-Befestigungspunkt (595) schwenkbar an der Scharnierhalterung (410) und fest an dem Anschlag (580) angebracht ist.

8. Öffnungssystem (300) nach Anspruch 7, bei dem das Freigabesystem (590) ferner umfasst:
einen entfernten Aktuator (560), der ausgelegt ist, um den Freigabehebel (592) um den Freigabehebel-Befestigungspunkt (595) zu schwenken.

9. Öffnungssystem (300) nach Anspruch 8, bei dem das Freigabesystem (590) ferner umfasst:
ein Verbindungselement (550), das den entfernten Aktuator (560) mit dem Freigabehebel (592) verbindet und das eine Bewegung des entfernten Aktuators (560) in eine Bewegung des Freigabehebels (592) umwandelt.

10. Öffnungssystem (300) nach einem der vorangehenden Ansprüche, ferner mit:
Sicherungsmitteln (490) zum Sichern des Offenhalteriegels (430) in dem überzentrierten Zustand (434).

11. Öffnungssystem (300) nach Anspruch 10, bei dem die Sicherungsmittel (490) ferner umfassen:
einen federbelasteten Stift (495), der an der Scharnierhalterung (410) und an dem Offenhalteriegel (430) befestigt ist und der den Offenhalteriegel (430) so vorspannt, dass der Offenhalteriegel (430) in dem überzentrierten Zustand (434) verbleibt.

12. Flugzeugschwenktür (200) mit dem Öffnungssystem (300) nach einem der vorhergehenden Ansprüche.

13. Flugzeug (100) mit der Flugzeugschwenktür (200) nach Anspruch 12.

## Revendications

1. Système (300) d'ouverture pour une porte pivotante (200) d'aéronef qui ferme une ouverture (303) dans un fuselage (102) d'un aéronef (100) dans une position fermée (305) et permet d'accéder à l'aéronef (100) via l'ouverture (303) dans le fuselage (102) dans une position complètement ouverte (308), le système (300) d'ouverture comprend :
un support (410) articulé qui est apte à la fixation à pivotement de la porte pivotante (200) d'aéronef au fuselage (102) de l'aéronef (100) ;
un mécanisme (420) de pivotement qui est fixé à pivotement au support (410) articulé et apte à effectuer un déplacement d'ouverture à pivotement de la porte pivotante (200) d'aéronef depuis la position fermée (305) vers la position d'ouverture complète (308) et un déplacement de fermeture à pivotement de la porte pivotante (200) d'aéronef depuis la position d'ouverture complète (308) vers la position fermée (305) ;
un verrou (430) de maintien d'ouverture qui est fixé à pivotement au mécanisme (420) de pivotement, dans lequel le verrou (430) de maintien d'ouverture est dans un état déverrouillé (432) lorsque la porte pivotante (200) d'aéronef est en position fermée (305) et se verrouille dans un état arc-bouté (434) lorsque la porte pivotante (200) d'aéronef est en position d'ouverture complète (308) afin d'empêcher le retour de la porte pivotante (200) d'aéronef en position fermée (305) ; et
un actionneur (460) qui est fixé de façon rigide au verrou (430) de maintien d'ouverture, dans lequel l'actionneur (460) agit sur le verrou (430) de maintien d'ouverture qui, à son tour, agit sur le mécanisme (420) de pivotement, effectuant ainsi les déplacements d'ouverture et de fermeture à pivotement de la porte pivotante (200) d'aéronef; le système (300) d'ouverture comprenant en outre une butée (580) qui est apte à bloquer le verrou (430) de maintien d'ouverture dans un état arc-bouté (434) ; dans lequel le système d'ouverture est **caractérisé par** un système (590) de libération qui est couplé à la butée (580) et apte à faire transiter le verrou (430) de maintien d'ouverture de l'état arc-bouté (434) à l'état déverrouillé (432).

2. Système (300) d'ouverture selon la revendication 1, dans lequel le verrou (430) de maintien d'ouverture comprend en outre :
une tige (440) ayant une première (441) extrémité et une deuxième (442) extrémité, dans lequel la première (441) extrémité est fixée à pivotement au mécanisme (420) de pivotement ; et
un levier (450) ayant une troisième (453) et une quatrième (454) extrémité, dans lequel la troisième (453) extrémité est fixée à pivotement à la deuxième (442) extrémité de la tige (440) et la quatrième (454) extrémité est fixée de façon rigide à l'actionneur (460).

3. Système (300) d'ouverture selon la revendication 2, dans lequel au moins l'un parmi la tige (440) ou le levier (450) est en forme de fourche.

4. Système (300) d'ouverture selon l'une quelconque des revendications 1 à 3, comprenant en outre :
un arbre d'entrainement (470) qui est fixé de façon rigide entre l'actionneur (460) et le verrou (430) de maintien d'ouverture.

5. Système (300) d'ouverture selon la revendication 4, dans lequel l'actionneur (460) comprend en outre :
un moteur (462) électrique qui est apte à faire pivoter l'arbre d'entrainement (470) afin d'effectuer les déplacements d'ouverture et de fermeture à pivotement de la porte pivotante (200) d'aéronef.

6. Système (300) d'ouverture selon l'une quelconque des revendications 4 ou 5, dans lequel l'actionneur (460) comprend en outre :
une poignée (464) qui est apte à faire pivoter l'arbre d'entrainement (470) afin d'effectuer les déplacements d'ouverture et de fermeture à pivotement de la porte pivotante (200) d'aéronef.

7. Système (300) d'ouverture selon l'une quelconque des revendications précédentes, comprend en outre :
un levier (592) de libération qui est fixé à pivotement au support (410) articulé à l'emplacement d'un point (595) de fixation du levier de dégagement et fixé de façon rigide à la butée (580).

8. Système (300) d'ouverture selon la revendication 7, dans lequel le système de libération (590) comprend en outre :
un actionneur (560) périphérique qui est apte à faire pivoter le levier (592) de libération autour du point (595) de fixation du levier de dégagement.

9. Système (300) d'ouverture selon la revendication 8, dans lequel le système de libération (590) comprend en outre :
un élément (550) de raccordement qui relie l'actionneur (560) périphérique au levier (592) de libération et qui transforme un déplacement de l'actionneur (560) périphérique en un déplacement de levier (592) de libération.

10. Système (300) d'ouverture selon l'une quelconque des revendications précédentes, comprenant en outre :
Des moyens (490) de fixation pour maintenir le verrou de (430) de maintien d'ouverture dans un état arc-bouté (434).

11. Système (300) d'ouverture selon la revendication 10, dans lequel les moyens (490) de fixation comprennent en outre :
une broche (495) à ressort qui est fixée au support (410) articulé et au verrou (430) de maintien d'ouverture et qui précontraint le verrou (430) de maintien d'ouverture de façon que le verrou (430) de maintien d'ouverture reste dans l'état arc-bouté (434).

12. Porte pivotante (200) d'aéronef comprenant le système (300) d'ouverture selon l'une quelconque des revendications précédentes.

13. Aéronef (100) comprenant la porte pivotante (200) d'aéronef selon la revendication 12.
